# EUROPEAN PATENT SPECIFICATION

(11) **EP 3 066 743 B1**
(45) Date of publication and mention of the grant of the patent: **20.12.2017**
(21) Application number: 14808516.0
(22) Date of filing: 04.11.2014
(51) Int. Cl.: H02J 7/00, H02J 7/04

(54) **INTELLIGENT CONTEXT BASED BATTERY CHARGING**
INTELLIGENTES KONTEXTBASIERTES BATTERIELADEN
CHARGE INTELLIGENTE DE BATTERIE REPOSANT SUR UN CONTEXTE

(30) Priority: 04.11.2013 US 201361899624 P; 13.05.2014 US 201414276856
(43) Date of publication of application: 14.09.2016
(73) Proprietor: QUALCOMM Incorporated, San Diego, CA 92121 (US)
(72) Inventor: HUSSAIN, Abid, Los Altos, California 94024 (US); O'DONOGHUE, Hugh, San Diego, California 92121-1714 (US); WHALE, Peter Charles, San Diego, California 92121-1714 (US); MORKAN, William Kevin, San Diego, California 92121-1714 (US); HAWAWINI, Shadi, San Diego, California 92121-1714 (US)
(74) Representative: Dunlop, Hugh Christopher
(86) International application number: PCT/EP2014/073740
(87) International publication number: WO 2015/063340

(56) References cited:
- EP-A2- 1 833 160
- DE-A1-102012 213 452
- US-A1- 2007 018 608
- US-A1- 2012 299 554
- US-A1- 2012 324 578

## Description

### BACKGROUND

The disclosure relates to battery charging, and in particular, to intelligent context based battery charging.

Unless otherwise indicated herein, the approaches described in this section are not admitted to be prior art by inclusion in this section.

Today, consumers are constantly on the move and as a result, portable electronic devices are becoming increasingly popular. For example, consumers prefer mobile phones and laptops over traditional telephones and desktop computers. The popularity of tablet personal computers, portable media players, and handheld videogame consoles are also on the rise. A commonality between all these portable electronic devices is that they include one or more rechargeable batteries (e.g., a nickel-cadmium (Ni-Cad) battery or a lithium-ion (Li+)) as a power source.

In general, rechargeable batteries degrade in charge capacity as a byproduct of the charge and discharge cycles. This degradation effect is cumulative and is highly accelerated by fast charge and discharge rates. While the discharge rate is heavily dependent on the usage of the device, the charge rate is typically controlled by the manufacturer during the design of the device. A manufacturer can set the charge rate to a slow charge rate to improve the longevity of the battery. This can be important for devices with embedded batteries that are not removable or replaceable. However, a slow charge rate results in a longer recharge times. Long recharge times equate to a long period of time that the consumer must remain near a power source, which can be undesirable to a consumer who is on the move. Thus, there is a need for improved charging techniques for rechargeable batteries.

US 2012/299554 describes a method for providing battery management for a device.

### SUMMARY

The disclosure pertains to battery charging. In one aspect, context information is accessed by an electronic device. The context information may describe one or more usage patterns of the electronic device. A prediction of a charging duration is generated based on the context information, for example. Charging parameters may be determined based on the charging duration, where the charging parameters are used to charge a battery of the electronic device. A battery charger may be configured with the charging parameters to charge a battery.

In one aspect, the disclosure includes a method comprising accessing, by an electronic device, context information describing one or more usage patterns of the electronic device, predicting, by the electronic device, a charging duration based on the context information, determining, by the electronic device, charging parameters based on the charging duration, wherein the charging parameters are used to charge a battery of the electronic device, and configuring a battery charger with the charging parameters to charge the battery.

In one aspect, the predicting comprises generating a model establishing relations between data elements of the context information and the charging duration.

In one aspect, the predicting further comprises storing the context information as charge history data and comparing the charge history data to a current context information to predict said charging duration.

In one aspect, the model is generated dynamically.

In one aspect, the model classifies past context information and current context elements into a discrete number of charging durations.

In one aspect, the charging parameters comprise a charge current and a float voltage.

In one aspect, the context information comprises measured parameters and prescriptive parameters, the method further comprising receiving the charging duration, the measured parameters, and the prescriptive parameters in a charging application and mapping the charging duration to the charging parameters based on the measured parameters and the prescriptive parameters.

In one aspect, the context information comprises a charge status, charge time, a location, a charge source, and a battery level.

In one aspect, the disclosure includes an electronic device comprising a battery charger, a battery, one or more processors, and a non-transitory computer readable medium having stored thereon one or more instructions, which when executed by the one or more processors, causes the one or more processors to perform certain techniques described herein, including access context information describing one or more usage patterns of the electronic device, predict a charging duration based on the context information, determine charging parameters based on the charging duration, wherein the charging parameters are used to charge the battery of the electronic device, and configure the battery charger with the charging parameters to charge the battery.

In one aspect, the disclosure includes a non-transitory computer readable medium having stored thereon one or more instructions, which when executed by one or more processor, causes the one or more processors to perform certain techniques described herein, including access context information describing one or more usage patterns of the electronic device, predict a charging duration based on the context information, determine charging parameters based on the charging duration, wherein the charging parameters are used to charge the battery of the electronic device, and configure the battery charger with the charging parameters to charge the battery.

The following detailed description and accompanying drawings provide a better understanding of the nature and advantages of the disclosure.

### BRIEF DESCRIPTION OF THE DRAWINGS

Fig. 1 illustrates an electronic device including intelligent battery charging according to one aspect.
Fig. 2 illustrates intelligent battery charging according to another aspect.
Fig. 3 illustrates configurable parameters of a battery charger according to one aspect.
Fig. 4A illustrates an example predictive engine according to another aspect.
Fig. 4B illustrates dynamic models according to another aspect.
Fig. 5 illustrates an example method of intelligent battery charging in an electronic device according to one aspect.
Fig. 6 illustrates intelligent charging on a mobile device according to one aspect.
Fig. 7 illustrates a charging system according to another aspect.
Fig. 8 illustrates a charging algorithm according to one example aspect.
Fig. 9 illustrates battery charging according to another aspect.
Fig. 10 illustrates a block diagram of an exemplary battery charger system according to another aspect.

### DETAILED DESCRIPTION

In the following description, for purposes of explanation, numerous examples and specific details are set forth in order to provide a thorough understanding of the disclosure. It will be evident, however, to one skilled in the art that the disclosure as expressed in the claims may include some or all of the features in these examples alone or in combination with other features described below, and may further include modifications and equivalents of the features and concepts described herein.

Aspects of the disclosure include systems and methods for context based battery charging. In one aspect, context information about usage patterns of an electronic device is used to customize charging a rechargeable battery. In one aspect, a predictive engine accesses context information and generates a predicted charge duration. A charging application customizes charging parameters in a battery charger based on the predicted charge duration. In some aspects, the charging application may generate suggestions to a user to improve battery charging.

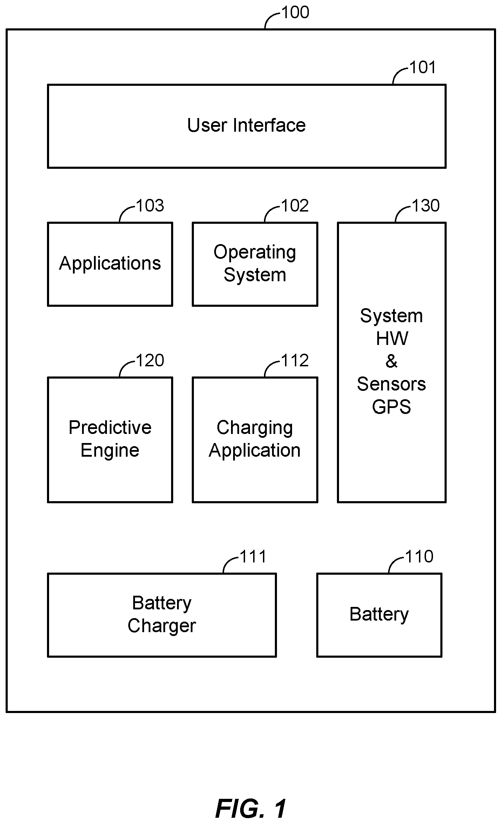

Fig. 1 illustrates an electronic device 100 including intelligent battery charging according to one aspect. Electronic device 100 may be a mobile phone (e.g., a smartphone), a tablet computer, or any other electronic device including a rechargable battery 110 as a power source, for example. In this example, electronic device 100 includes a user interface 101 for receiving user inputs and providing outputs. Interface 101 may be a single component, such as a touchscreen, or multiple components such as a display and keyboard, for example. Electronic device 100 may include system hardware (HW), such as one or more microprocessors and/or controllers, sensors, and a location system such as hardware and/or software for a global positioning system (GPS), for example, which are collectively denoted as 130 in Fig. 1. Electronic device 100 may further include an operating system 102 and applications 103. Applications 103 may include a wide variety of programs that may be loaded on device 100 by a user to perform a wide range of user specific functions (e.g., "Apps").

Features and advantages of certain aspects the disclosure include accessing context information from different components of the electronic device 100 to improve battery charging. Context information may include application data (e.g., an appointment on a calendar), operating system data (e.g., date and time), GPS data (location of the device), and other information about a particular user's device usage patterns. In this example, a charging application 112 and/or predictive engine 120 sends and/or receives information to/from user interface 101, operating system 102, one or more applications 103 and/or other system HW & sensors or GPS 130 to configure a battery charger 111 to charge a battery 110 to optimize charging around usage patterns of electronic device 100, for example. In some aspects described in more detail below, predictive engine 120 may receive information including, but not limited to, calendar information from a calendaring application, time and date information from operating system 102, a battery charge information (e.g., a state of charge a.k.a charge level) from battery charger 111, location information (e.g., from a GPS). Predictive engine 120 may use the received information to create a model pertaining to the user's charging patterns and produce a predicted duration for a charge. In various aspects, charging application 112 may receive information including, but not limited to, charging parameters from battery charger 111, one or more predictions from prediction engine 120, application information, and hardware or operating system information, to customize charging parameters in battery charger 111 or generate suggestions to a user through interface 101, for example. Responses from users may be received in charging application 112, for example, and incorporated into algorithms to customize charging parameters to optimize battery charging. Predictive engine 120 and/or charging application 112 may store the information as charging history information to improve predictions (by predictive engine 120) and/or suggestions (by charging algorithm 112).

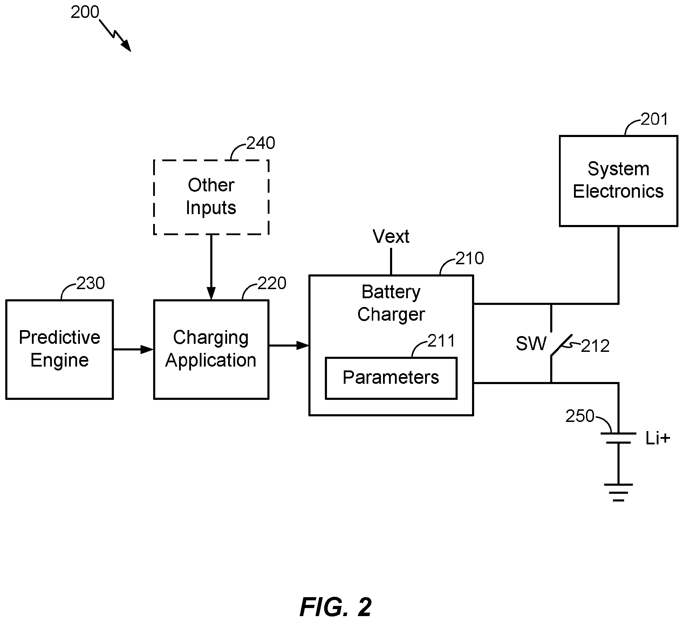

Fig. 2 illustrates intelligent battery charging according to another aspect. In this example, a battery charger 210 has an input coupled to an external power source to receive a voltage, Vext. Battery charger 210 may provide power to system electronics 201 and rechargeable battery 250, which in this example is a lithium ion battery (Li+). A switch (SW) 212 may allow battery 250 to provide power to system electronics 201 when the external power source is disconnected, for example. Battery charger 210 may be part of a single power management integrated circuit (PMIC) or provided as a separate circuit.

Battery charger 210 is configured with charge parameters 211 to produce voltage and current to charge battery 250. In this example, charging application 220 receives information from predictive engine 230 and information from other inputs 240 (e.g., applications, OS, system HW). Charging application 220 customizes the charge parameters 211 in battery charger 210 to improve charging based on inputs from the predictive engine 230 and optionally other inputs 240, for example.

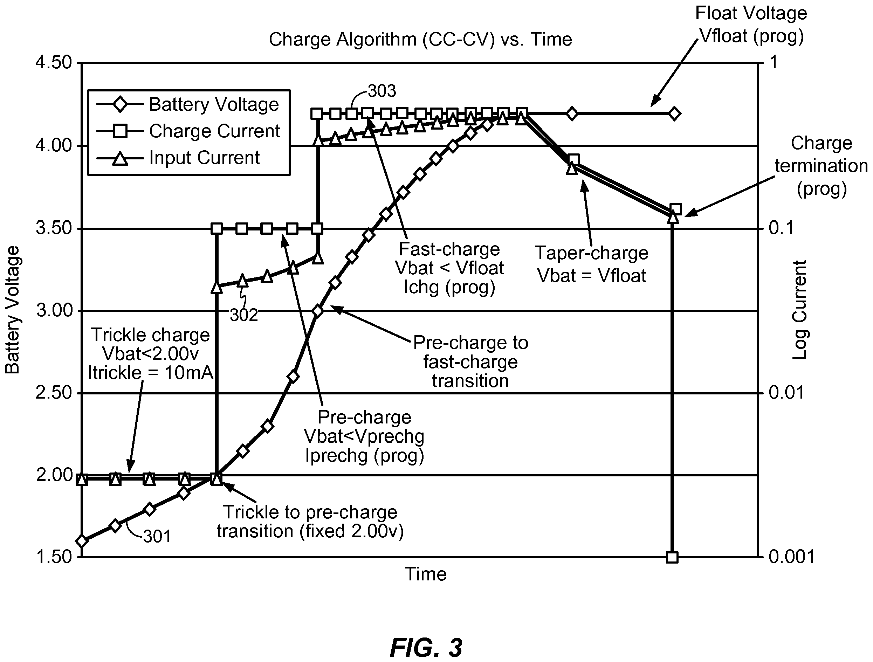

Fig. 3 shows an example battery charging plot illustrating configurable parameters of a battery charger according to one aspect. The plot in Fig. 3 includes three curves: battery voltage curve 301, input current curve 302, and charge current curve 303. The battery charge cycle may start with a deeply depleted battery having a very low voltage (e.g., Vbatt < 2v). In such a case, a battery charger may be initially configured to provide a very small trickle charge current (e.g., Ichg = 10mA). After some time period of trickle charge, the battery voltage Vbatt will increase to a trickle charge to pre-charge transition voltage, which is fixed at 2v in this example but could be programmable in other aspects. When the charger is in pre-charge mode, it may produce a programmable pre-charge current into the battery until Vbatt increases to a pre-charge to fast charge transition, which may be programmable. After transitioning to fast charge mode, the battery charger may produce a programmable fast charge current to the battery. In this example, the fast charge current is constant, but in other aspects the fast charge current may initially be set at a maximum level and reduced as Vbatt increases, for example. During fast charging, Vbatt continues to increase. When Vbatt increases to a threshold, which is also programmable, the battery charger may transition from current controlled charging to voltage controlled charging. In this example, the battery charger transitions to constant voltage charging when Vbatt is equal to a programmed float voltage value, Vfloat. In constant voltage charging mode, the voltage on the battery is held constant (e.g., at Vfloat) and the charge current decreases (tapers off). In other aspects, a programmable threshold triggering a transition from controlled current charging to controlled voltage charging may be different (e.g., greater than) a programmable float voltage used during controlled voltage charging. Charging may terminate when the charge current in voltage control mode drops below a programmable value, for example.

The programmable charging parameters described above are examples of charging parameters 211 in Fig. 2. In one example aspect, charging parameters 211 may be modified by charging application 220 to optimize battery charging (e.g., longer battery life or shorter charge time). For example, predictive engine 230 may output different predicted charging durations to charging application 220, and application 220 may change the parameters controlling the pre-charge to fast charge transition, charge current, and/or float voltage, for example, based on the predicted charging duration. As mentioned above, the pre-charge to fast charge voltage transition indicates how soon the battery charger starts fast charging as Vbatt increases. If the battery charger starts fast charging sooner (i.e., at lower values of Vbatt), it can reduce charge times, but this also reduces battery life. Similarly, increasing the fast charging current will speed up charging, but will also reduce the battery life. Likewise, increasing the float voltage will increase the runtime of the electronic device, but will degrade battery life. Therefore, in one example application, if a predicted charging duration from predictive engine 230 is long (e.g., 8 hours), then one or more of the parameter controlling the pre-charge to fast charge transition, fast charge current, and/or float voltage may be optimized for slow charging and long battery life. Conversely, if the predicted charging duration from predictive engine 230 is short (e.g., 15 minutes), then one or more of the parameters controlling the pre-charge to fast charge transition, fast charge current, and/or float voltage may be optimized to minimize the charge time, for example. In other aspects, charging application 220 may make analogous changes to the charging parameters 211 based on other inputs as described in more detail below.

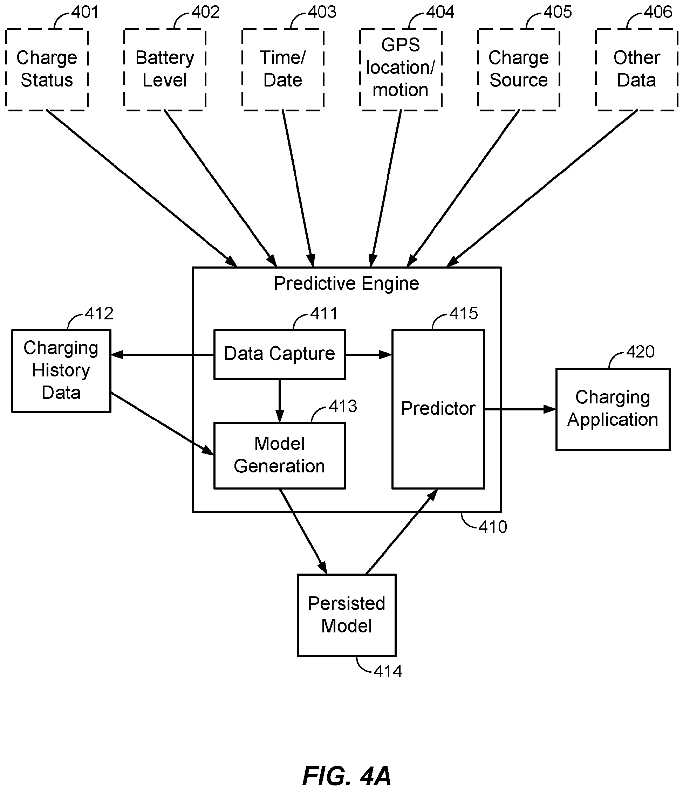

Fig. 4A illustrates an example predictive engine 410 according to another aspect. Certain aspects of the disclosure may access and store user specific information about historical context data to generate predictions used to optimize charging of a battery. In this example, predictive engine 410 receives context information about an electronic device's use patterns relevant to charging a battery. Some optional context information that may be advantageous for battery charging may include a charge status 401 (e.g., notify predictive engine when charging stars and stops), battery level 402, time and/or date 403, GPS location and/or motion 404, charge source 405 (e.g., AC adapter or Universal Serial Bus (USB) port), and optionally other input data 406. Predictive engine 410 comprises a data capture component 411, model generation component 413, and predictor component 415. Data capture component 411 receives the context information and stores the context information as charging history data 412 (e.g., in a memory of the electronic device). Charging history data 412 may include data of each particular charging activity including a day of the week (e.g., Sun, Mon, ..., Fri, Sat), time (e.g., hour and/or minute a charge was initiated), a period of the day (morning, afternoon, evening) a charge was initiated, initial battery levels, duration (e.g., bucketed into defined durations such as < 30min, < 60min, < 90min, or > 90min), location and/or motion (e.g., latitude/longitude or even cell ID), source type (AC or USB), and a last charge time, for example. In some aspects, sensors such as GPS, an accelerometer, or gyroscope may also provide motion of the user to determine further context information (e.g., driving to work, stationary in the office or at home, etc...). In some aspects, time may advantageously be expressed in hour of the day and period of the day and classified as follows:

| | |
|---|---|
| a. Early Morning: | 5am-8am |
| b. Morning: | 8-12am |
| c. Afternoon: | 12am-5pm |
| d. Evening: | 5pm-8pm |
| e. Late Evening: | 8pm-12pm |
| f. Night: | 12pm-5am. |

Model generation component 413 receives charging history data 412 and current context information from data capture component 411 and produces and/or updates a model that establishes relations between data elements of context information (e.g., time, location, etc...) and charge duration. The model may indicate what particular data elements in the context information impact a predicted charge duration, for example. Predictor 415 receives a persisted model 414 and current context information. Predictor 415 analyzes the current context information and compares the current context information to persisted model 414 to produce predicted charge durations, for example. A predicted charge duration may be a predicted amount of time a user is expected to charge the battery under current conditions (i.e., current context). In other aspects, predictive engine 410 may output a particular time when a user is predicted to perform a charging operation (e.g., when a user is predicted to plug the phone into a wall adapter). Aspects of the disclosure may use classifiers and classification techniques to receive and process context information and generate and analyze models to produce predicted charge durations, for example. Some aspects may use classification, prediction, and modeling techniques described in U.S. Patent Application Publication No. US 2013/0238540 A1, Application Serial No. 13/602,250, filed September 3, 2012, entitled "Method and Apparatus for Improving a User Experience or Device Performance Using an Enriched User Profile," the contents of which are hereby incorporated herein by reference in its entirety.

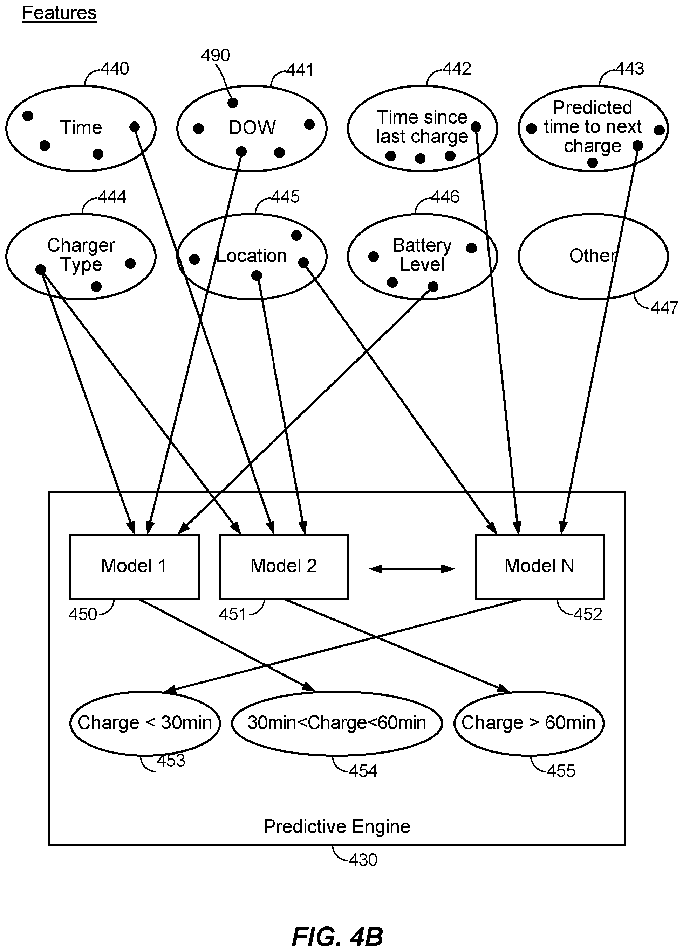

Fig. 4B illustrates dynamic models according to another aspect. Features and advantages of the disclosure include generating models dynamically based on input data, such as features. Fig. 4B illustrates feature data, including time data 440, day of week (DOW) 441, time since last charge 442, predicted time to next charge 443, charger type 444, location 445, battery level 446, and/or other features, for example. Each feature may have multiple different data values, as illustrated by data points such as 490. Predictive engine 430 may use the data features to generate models, such as models 450-452. Models are generated based on historic and current input feature data to discrete outputs. In this example, models classify an input data set to one of three outputs corresponding to predicted charge times: charge for less than 30 minutes (charge < 30 min), charge for between 30 minutes and 60 minutes (30 min < charge < 60 min), and charge for more than 60 minutes (charge > 60 min). One advantage of the disclosed approach is that models are dynamic in that they change over time as the feature data changes to respond to changes in usage patterns. Accordingly, dynamic models do not require reprogramming or reconfiguration as usage patterns change.

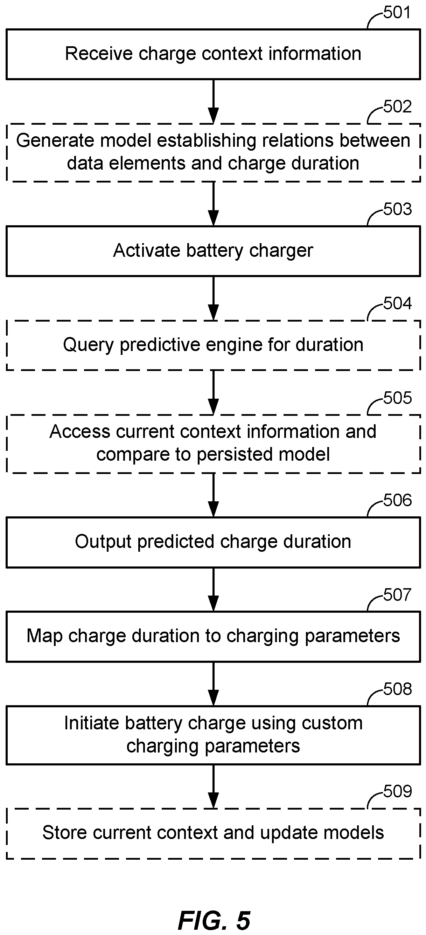

Fig. 5 illustrates an example method of intelligent battery charging in an electronic device according to one aspect. At 501, charge context information may be received in predictive engine. For example, context information may include time, date, battery level, location/motion, charge source (e.g., AC adapter or USB port), or charge status (e.g., charging/not charging). The context information may be stored as part of a charging history as described above. At 502, a model is optionally generated to establish relations between data elements in the context information and charge duration. At 503, a battery charger in the electronic device is activated. For example, a user may plug a mobile phone into a wall adapter or USB port, which may activate charging. At 504, optionally, a charging application may send a query to a predictive engine for a charging duration (e.g., how long does the predictive engine believe this charging will last under present circumstances?). As a further option, the predictive engine may access current context information and compare the current context to a persisted model at 505. For example, the predictive engine may access the current date, time, location/motion, battery level, charge source, and other system data and determine, using the persisted model, a likely charging duration for the present charging operation. Predicted charge durations may be provided in one of a number of "buckets." For example, predicted charge durations less than 15 minutes may be placed in a "10 minute" bucket, predicted charge durations between 15 minutes and 45 minutes may be placed in a "30 minute bucket," predictions between 45 minutes and 1.5 hours may be placed in a "1 hour bucket," predictions between 1.5 and 2.5 hours may be placed in a "2 hour bucket," and predictions greater than 2.5 hours may be placed in a "greater than 3 hour bucket." At 506, the predicted charge duration is output to the charging application. At 507, the charging application maps the predicted charge duration to charging parameters, which may be set in a battery charger. For example, if the predicted charge duration is 10 minutes for a particular battery level, a lookup table may be used to determine particular charge current parameters, float voltage parameters, or other parameters to increase the battery level the maximum amount possible within the predicted charge time. Alternatively, if the predicted charge duration is 8 hours (e.g., because the location is home, the time is 11pm, and the context information history indicates electronic device is rarely used between 10pm and 7am), then a lookup table may be used to determine particular charge current parameters, float voltage parameters, or other parameters to increase the battery level at a slow rate over the predicted charge time to maximize battery life. Once the charge parameters are set in the battery charger, a battery charge cycle is initiated using the customized charging parameters at 508. At 509, the current context information for this charge cycle is optionally stored and the models may be updated for future use, for example.

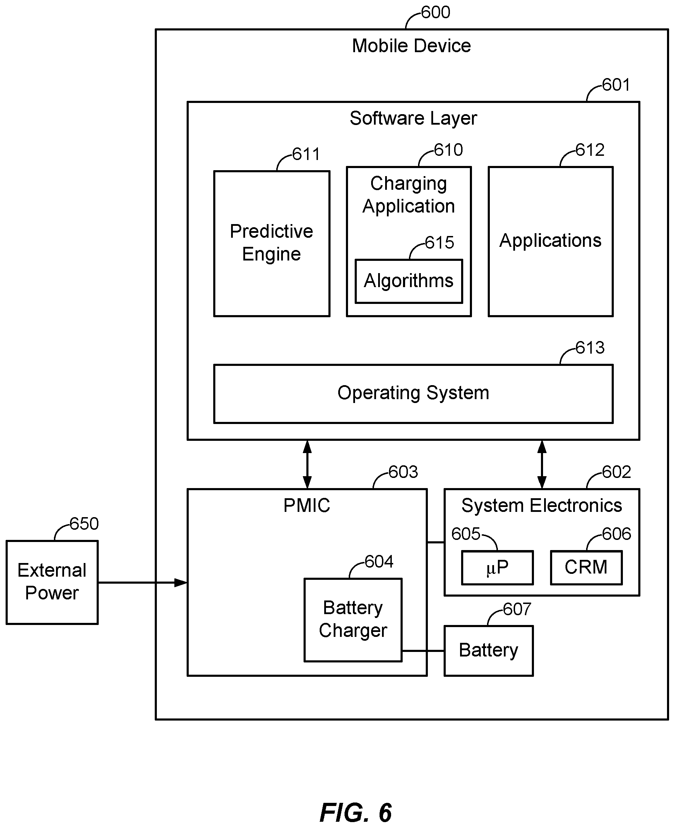

Fig. 6 illustrates intelligent charging on a mobile device according to one aspect. In this example, a mobile device 600, such as a table computer or smartphone, may include a charging application 610 that receives inputs from a predictive engine 611 and applications 612. Predictive engine 611 is optional in this example. Charging application 610 runs on a software layer 601 and may communicate with hardware, including system electronics 602 and a power management integrated circuit (PMIC) 603 through operating system 613 and/or communication buses, such as an I2C bus, for example. Charging application 610, predictive engine 611, applications 612 and operating system 613 may be stored in a non-transitory computer readable medium (CRM) 606 such as memory (e.g., RAM, ROM, non-volatile memory) and executed by one or more processors (e.g., microprocessors, µP) 605. A non-transitory computer readable medium may store one or more instructions and/or programs, which when executed by the one or more processors, causes the one or more processors to perform the operations described herein. Charging application 610 may configure a battery charger 604, which is shown in this example as part of PMIC 603, but could be a standalone IC. Charging application 610 may receive data inputs from applications and optionally a predictive engine to configure battery charger 604, for example. In this example, charging application may send and receive signals to a user interface (not shown) to further tailor the battery charging process.

In one aspect, charging application 610 generates suggestions to a user to improve battery charging. Suggestions can be instructions or directions provided by charging application 100 to direct a user of the electronic device to perform an action, for example. In one aspect, the action can improve the charge performance of the battery when performed by the user. In one example, charging application 610 provides a suggestion when it detects that a battery is nearly depleted. The suggestion can direct the user to a nearby power source such a wall outlet. For instance, charging application 610 can detect the geolocation of the electronic device using a location unit and identify one or more power sources that are nearby the detected geolocation from a registry of power sources available to the charging application, for example. The one or more power sources can be provided to the user as a suggestion of places to charge the electronic device. This suggestion can assist the user in locating a wall outlet to plug in an AC/DC adapter for charging the electronic device.

In another aspect, charging application 610 can provide a suggestion when a current charging rate is less than desirable. The suggestion can be to locate another power source capable of providing a desirable charging rate. For example, the electronic device can be plugged into a USB port of a personal computer that is providing a charging rate that is less than a desired charging rate. In other words, the USB port is charging the battery too slowly. Charging application 610 detects the inadequate charging rate and generates a suggestion of a nearby wall outlet capable of providing a more optimal charging rate (e.g., a charging rate that is closer to the maximum charging rate). In one example, the suggestion can be "Use AC/DC adapter instead of PC USB port for optimal charging at this time."

In yet another aspect, charging application 610 can provide a suggestion to disable certain functionality or close particular applications on the electronic device when the current charging rate is less than desirable. Performing the suggestion can decrease the discharge rate of the electronic device, thereby shortening the period of time that is necessary to fully charge the battery. Depending on the charging rate, the amount of power needed to fully charge the battery, and/or the period of time that is allocated to charging the battery (e.g., a duration from predictive engine 611), charging application 610 can determine whether the battery can be fully charged in the allocated period of time. If the battery cannot be fully charged in the allocated period of time, charging application 610 can generate a suggestion that the user disable features or functionality of the device. For example, a suggestion can be "Please turn off a radio feature of the device for fastest charging." As another example, the suggestion can be "Please turn off the display of the device for fastest charging." As yet another example, the suggestion can be "Please turn off the electronic device for fastest charging." In some examples, charging application 610 can first provide a suggestion to locate another power source. If the charge rate is still insufficient after recommending the other power source, charging application 610 can then provide a suggestion to disable functionality or close applications of the electronic device.

In yet another aspect, charging application 610 can also provide a suggestion to disable certain functionality or close a particular application on the electronic device when the thermal loads in the electronic device are higher than a maximum value. The maximum value can be set by the manufacturer. Thermal loads in mobile devices can originate primarily from three main sources. The first source is the processors of the electronic device which can include an application processor to manage applications and a baseband processor to manage radio functionality of the electronic device which includes making calls or transferring data. The second source is the RF power amplifier which enables the electronic device to transmit voice and data signals to a base station tower to route a telephone call or internet address. Typically the power amplifier uses the greatest battery power and thus dissipates the most heat. The third source is the battery charger which charges the battery.

When the thermal loads in the device are higher than a predefined maximum value, components of the electronic device can be damaged. This damage can affect the functionality, longevity, or reliability of the electronic device. In one example, each component of the electronic device can specify a maximum thermal load. When the maximum thermal load of a component is exceeded, the component can perform sub optimally or can be damaged. In one example, the maximum thermal loads (of the electronic device as a whole or the components of the electronic device) and the current thermal loads can be received as part of the inputs of charging application 610. Depending on the inputs, charging application 610 can output a desired charging state. The desired charging state can be throttled back as to not overload the thermal loads of the electronic device since the battery charger dissipates a large amount of heat. Charging application 610 can also provide a suggestion to disable certain functionality or close particular applications when the current thermal loads are too high. Disabling other functionality can reduce the overall thermal loads in the electronic device. When the overall thermal loads in the electronic device decreases, the desired charging state can be readjusted to account for the decrease in overall thermal load. For example, a suggestion can be "Device is too hot. Please turn off device for fastest charging."

Charging application 610 can also access information related to charging the battery. For example, such data can include the number of times the battery has been charged, the manner in which the battery has been charged (e.g., charging rate), and the condition of the battery (which includes its ability to hold charge, thermals, life expectancy, etc.). This data can also be outputted by charging application 610 for analysis by another system, such as the predictive engine.

Charging application 610 includes one or more charging algorithms 615. Charging algorithm 615 can process context information received by charging application 610 into a desired charging state (or desired charging rate), and/or suggestions. The context information received by one or more algorithms can fall into three categories: prescriptive parameters, measured parameters, and predictive parameters. One or more parameters from one or more categories can be analyzed by charging algorithms 615 to determine the desired charging state, desired charging rate, and/or suggestions, for example.

### Prescriptive Parameters

Prescriptive parameters are static parameters that are prescribed by the user or the manufacturer to tune the performance of the electronic device and more particularly the performance of the battery charger. Prescriptive parameters can include attributes of the battery charger, battery, or other components within the electronic device. Prescriptive parameters may be static parameters, which may not be based on feedback or measurements from the electronic device, and thus may not dynamically change while the electronic device is turned on unless instructed by the user.

In one aspect, a prescriptive parameter can be a factory hardware preset notifying charging algorithm 615 of hardware characteristics of the electronic device. For example, the hardware preset can be a configuration setting of whether the electronic device uses an embedded or replaceable battery. Devices with an embedded battery can be more sensitive to shortened battery cycle life since the battery is not easily replaced. As a result, charging algorithm 615 can tune the performance of the battery charger to improve battery cycle life. As another example, the hardware preset can be an identifier associated with the type of battery installed in the device or the type of battery charger installed within the device. The type of battery and/or the type of battery charger can limit the desired charging states that can be applied. For instance, a Lithium Ion (Li+) battery can be configured for slow, medium, and fast charging, while a Ni-Cad battery can only be configured for slow or medium charging. Similarly, the type of battery charger installed in the device can specify what charging rates are available. As another example, the hardware preset can be a battery capacity value or battery identifier associated with the battery. As yet another example, the hardware preset can be a maximum thermal load for the electronic device as a whole or for a component of the electronic device. For instance, the maximum thermal load of the battery can be specified. Exceeding the maximum thermal load of the battery can damage the battery thus resulting in shorter battery cycle life or charge performance.

One example of a user generated prescriptive parameter may be a user profile. The user profile can include a charging profile out of a set of available charging profiles. A charging profile is a holistic description of how the electronic device should be charged. The holistic description can balance a variety of factors including charging performance (e.g., charging time), thermal load, and battery life. These factors are related to one another and therefore a charging profile describes the importance (or weighting) for each of these factors. Depending on factors such as how a user intends to use the device or how often the device is to be replaced, a charging profile can be preferred over another.

In one example, a mobile device may have a wide range of end consumers, and therefore, a manufacturer can include a variety of charging profiles to tailor the charging performance of the smartphone to a particular end consumer. For instance, a businessman can use his smartphone for business tasks (emails, scheduling, applications, etc.). Furthermore, the smartphone can be replaced every six months since it is part of corporate policy. Given that the businessman cares little for battery cycle life since the device is replaced frequently, a "power user" charging profile can be selected. The "power user" charging profile can ignore the importance of battery life cycle in exchange for faster charging performance. In contrast, a casual user of the smartphone may periodically check email and call family, but does not always need a full charge and rarely upgrades the phone. Thus, such a user is most interested in a device that will last many years. In this instance, a "causal user" charging profile can be selected. The "casual user" charging profile can place the importance on improved battery cycle life in exchange for slow charge performance, for example.

In some examples, exceptions can also be added to a given charging profile to further fine tune the charging performance of the electronic device. Exceptions can be attached to a given charging profile. In the example above, the businessman may find discomfort in holding a hot phone next to his face. As a result, an exception can be added to the "power user" charging profile where the charging performance should be throttled back when the user is making a voice call without a Bluetooth headset and the battery is charging, for example.

### Measured Parameters

Measured parameters are parameters based on the past and/or present environment of the electronic device. The measured parameters can be measurements that are dynamically taken from the electronic device. These measurements can be used to dynamically update the charging behavior according to the past and/or present environment, thus allowing the charging application 610 to tune the battery charging according to available resources and past and present conditions, for example.

In one aspect, a measured parameter can be properties of the battery. For example, the battery temperature, condition, and age can be dynamically determined and transmitted to charging application 610. Charging algorithm 615 can consider the optimal charging rate given the temperature, condition, or age of the battery. For instance, a battery may not charge well when it is hot and thus charging algorithm 615 can take into consideration the battery temperature when determining a desired charging state.

In another aspect, a measured parameter can be the available power source. The electronic device can sense what power source is currently be used to charge the electronic device (e.g., USB or AC) and relay this information to charging application 610. Charging algorithm 615 can determine a desired charging state based on the power source. For example, if the power source is a USB port, charging algorithm 615 can determine the limitations of the power source and adjust the desired charging state accordingly.

In another aspect, the measured parameter can be the thermal loads in the electronic device. The thermal loads can be determined by a thermal measurement unit of the electronic device. The thermal measurement unit can measure the thermal load of the electronic device or a component of the electronic device. Charging algorithm 615 can compare the measured thermal load with prescriptive parameters that describe the maximum thermal load of a component within the electronic device (such as battery, battery charger, processors, power amplifier, etc.) or the thermal load of the electronic device as a whole. Charging algorithm 615 can consider the effect changing the charging rate will have on the thermal load when it provides a desired charging state.

In another aspect, the measured parameter can be the geolocation of the electronic device. The geolocation can be determined by a location tracking unit of the electronic device, such as a GPS, for example. Charging algorithm 615 can compare the geolocation against a plurality of saved locations, such as home, office, travel, gym, etc. If a match occurs, charging algorithm can adjust the charging behavior accordingly. For example, an electronic device that is at home is likely to stay plugged into the power source for an extended period of time. In contrast, an electronic device that is in the office may be more likely to be plugged in sporadically as the user goes from meeting to meeting. Charging algorithm 615 can consider these factors when determining the desired charging state or suggestions.

### Predictive Parameters

Predictive parameters are parameters that may be derived by a predictive analysis engine or a charging application. As described above, a predictive analysis engine may predict charge duration or times charging may occur by analyzing measurements and behavior of the electronic device to deduce usage patterns. Similarly, in some examples, charging application 610 may access (e.g., snoop) other applications on the electronic device to discover information about the user, such as the user's schedule. For instance, charging application 610 may retrieve calendar appointments from a calendar application. Similarly, charging application 610 determine that the typical work hours and sleep hours of the user by analyzing the usage of the electronic device.

In one aspect, charging application 610 may output a predicted schedule for the user based on the usage patterns. The predicted schedule can predict the user's weekly or daily patterns. This can include predicting periods of activity/inactivity, the location of the electronic device throughout the day (e.g., will be in the office at 2pm today), and the urgency of having the electronic device sufficiently powered to perform a task.

For example, predictive analysis engine 611 may predict a charging duration as described above, where an electronic device that is plugged in for charging at 11pm will remain plugged in until 6am the next day based on a consistent pattern of device inactivity between the hours of 11pm and 6am. These periods of inactivity (or even periods of activity) can be derived from usage patterns and be used by the predictive analysis engine to better predict the future charging durations of the electronic device.

As another example, charging application 610 may determine that the electronic device will not be plugged in for the next five hours based on calendar appointments retrieved from a calendar application. This information can be processed by charging application 610 so that charging algorithm 615 can factor that into consideration when generating the desired charging state and suggestions, for example.

As yet another example, charging application 610 may determine that the user of the electronic device will be on a train for the next two hours and that this overlaps with telephone appointments. Given that the user will likely have to make calls while on the train, charging application 610 may generate an urgent notification to have the electronic device sufficiently charged to make these calls. Charging algorithm 615 can detect this urgent notification and provide suggestions to the user that help ensure the device is properly charged before the user boards the train.

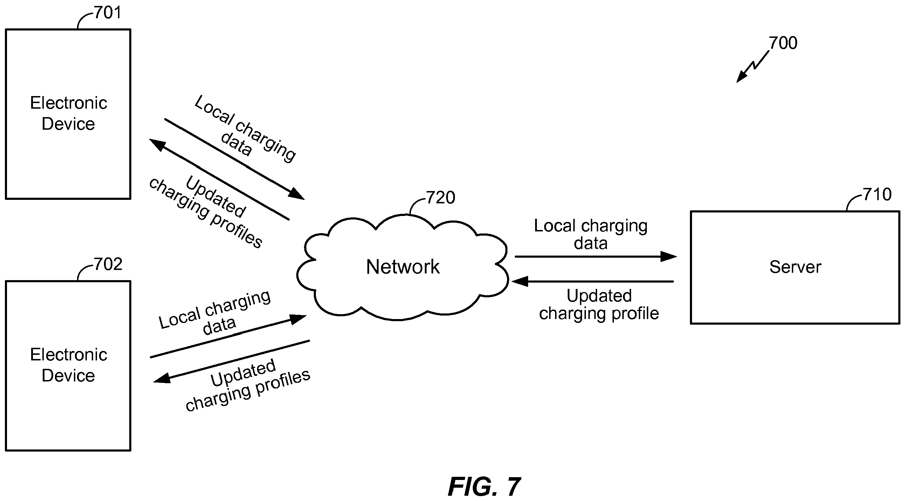

Fig. 7 illustrates a charging system according to another aspect. Charging system 700 includes electronic device 701, electronic device 702, network 720 (e.g., including the Internet and/or a wireless network), and server 710. Electronic device 701 and electronic device 702 can be similar or substantially similar to electronic device 600 of Fig. 6, for example. Local charging data is transmitted from electronic device 701 and electronic device 702 through network 720 to server 710. Server 710 can analyze the local charging data received from the electronic devices to determine whether the charging performance of the electronic devices can be improved. Typically when the electronic device is created by the manufacturer, charging profiles (e.g., slow charge, medium charge, fast charge) are stored in the electronic device. These charging profiles are based on estimated performance calculations of the battery and battery charger. Actual performance of the battery and battery charger may differ slightly, thus leaving room for improvement. Server 710 can analyze the actual performance of the battery and battery charger to determine if the charging profiles should be updated to improve battery performance. If it is determined that battery performance of a charging profile can be improved, the charging profile can be updated. Local parameters that can be combined to provide better service to the user include: performance of battery as new data is collected and the performance of other chargers deployed in the market. Server 710 can then transmit the updated charging profile to electronic devices 701 and 702 via network 720.

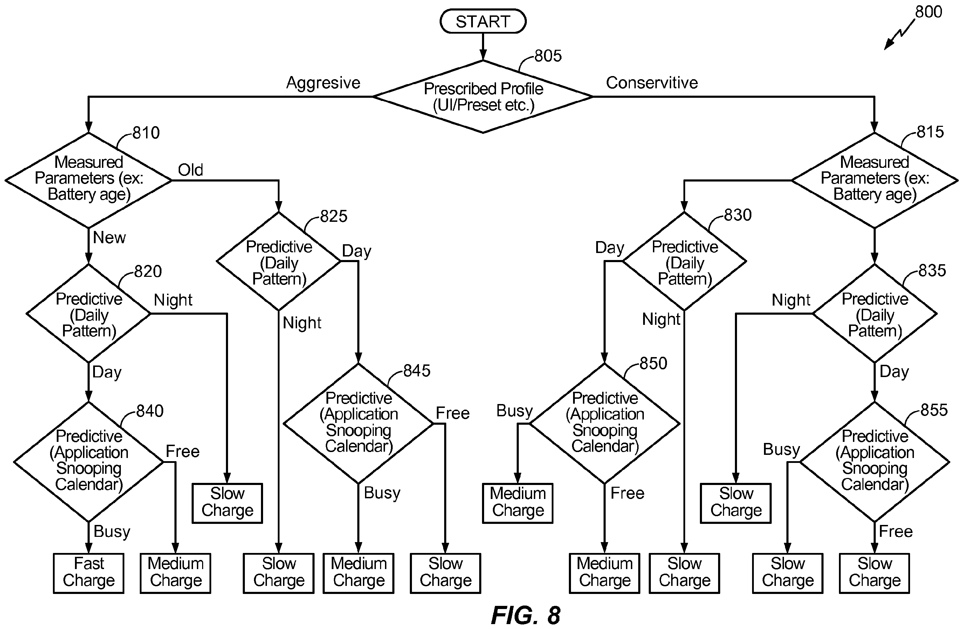

Fig. 8 illustrates a charging algorithm according to one example aspect. Charging algorithm 800 can be a part of charging algorithm 615 of Fig. 6, for example. The example flow chart in Fig. 8 illustrates one optional example technique for using prescriptive, measured, and predicted parameters and is to be understood as illustrative a not limiting of the aspects described herein. For example, at 805 a charging application may access prescribed parameters, such as a user profile, to determine if the user is a power user or casual user (e.g., or another one of potentially many other classifications). If the user is a power user, the process implements aggressive charging to minimize charge time and proceeds to 810. If the user is a casual user, for example, the process may implement conservative to extend battery life and proceed to 815.

For aggressive charging, the charging application may evaluate measured parameters at 810, such as battery age, for example. If the battery is new, then it may be more susceptible to fast charging. However, if the battery is old, it may be desirable to extend battery life by slowing down the charge process. Predictive charging is illustrated at 820, 825, 840, and 845. For a new battery, charging during a busy day (820/840), a predicted charging duration may be short, which may cause charging application to configure the battery charger for a fast charge. If the day is less busy, a predicted charging duration may be in an intermediate bucket, and a medium charge may be performed. For night time, a predicted charge may be in a longer duration bucket, and a slow charge may be performed, for example. As illustrated at 825 and 845, the same process for an older battery may result in a medium charge for a busy day and slow charge on a less busy day. In this case, a received duration from the predictive engine may be combined in a charging algorithm with battery age, where durations are mapped to different charging parameters based on an age of the battery, for example. In other aspects, charging durations from a predictive engine may be mapped to a wide variety of charging parameters based on other measured parameters, for example.

In this example, a conservative profile produces a similar process as illustrated at 815, 830, 835, 850, and 855. Similarly, predicted charge durations are mapped to different charging parameters based on both prescribed and measured parameters. For example, charging a new battery with a conservative profile during a busy day may result in only a medium charge cycle, which is the same charge cycle used on a free day for a conservative profile. In other words, different predicted durations may be mapped to the same or similar charging parameters for particular measured and prescribed parameters (e.g., conservative profile and new battery). However, a longer predicted duration generated during the night may be mapped to a different set of charging parameters to implement a slow charge. Analogously, conservative charging of an old battery may cause all predicted durations to be mapped to parameters to implement a slow charge to preserve battery life, as illustrated at 835 and 855, for example.

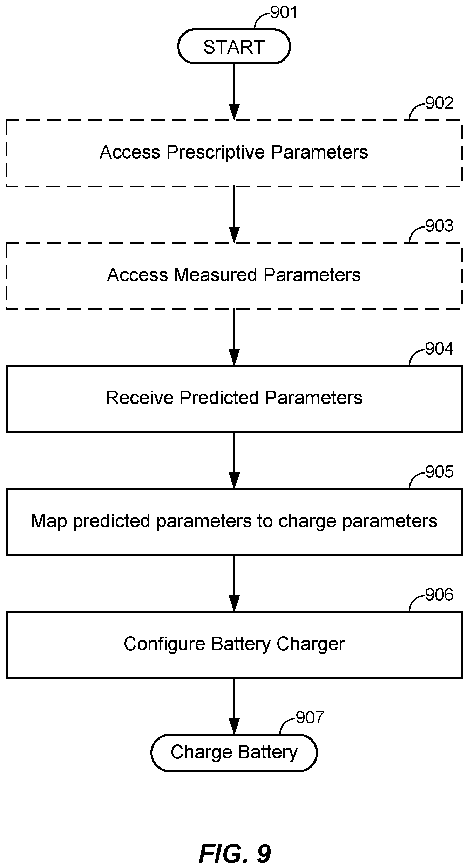

Fig. 9 illustrates battery charging according to another aspect. Fig. 9 shows a more generic version of the example process shown in Fig. 8. Battery charging may start at 901, when a user may plug an electronic device into a power source, such as a USB port, AC adapter, or other form of external power. At 902, prescriptive parameters are optionally accessed by a charging application. At 903, measured parameters are optionally accessed by the charging application. At 904, predicted parameters are received from a predictive engine, for example. At 905, the predicted parameters are mapped to charging parameters (e.g., charge current and/or float voltage). In some example aspects, the predicted parameters are mapped to charging parameters based on the prescribed and measured parameters, for example. At 906, the battery charger is configured with the charging parameters. At 907, battery charging is performed.

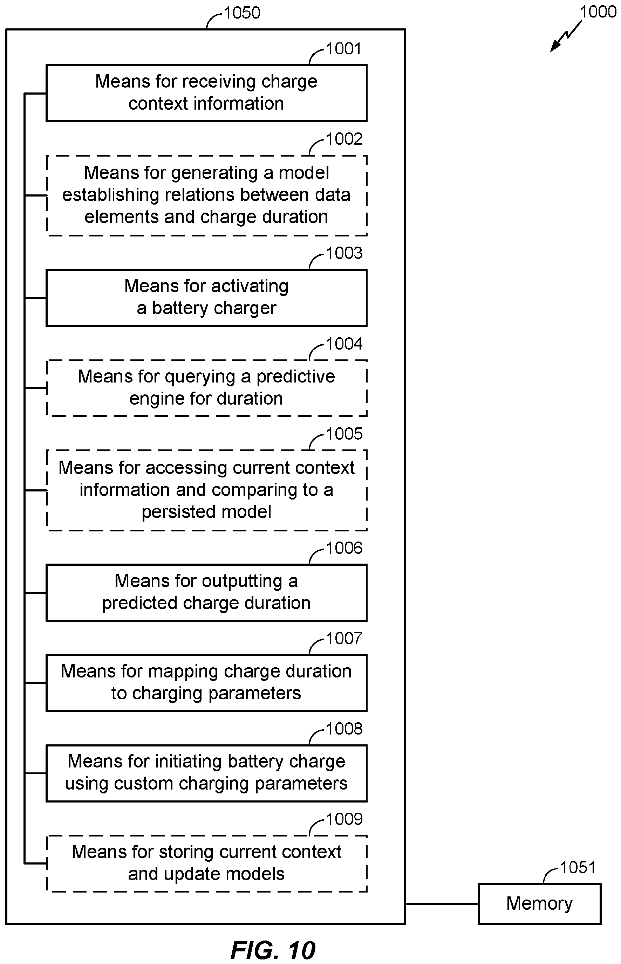

Fig. 10 illustrates a block diagram of an exemplary battery charger system according to another aspect.

For example, system 1000 can reside at least partially within an electronic device (e.g., electronic device 100). It is to be appreciated that system 1000 is represented as including functional blocks, which can be functional blocks that represent functions implemented by a processor, software, battery charging circuits, and/or combination thereof. System 1000 includes a logical grouping 1050 of electrical components that can act in conjunction.

For instance, logical grouping 1050 can include an electrical component that may provide means for receiving charge context information 1001. Further, logical grouping 1050 can include an electrical component that may provide means for generating a model establishing relations between data elements and charge duration 1002. Further, logical grouping 1050 can include an electrical component that may provide means for activating a battery charger 1003. Further, logical grouping 1050 can include an electrical component that may provide means for querying a predictive engine for duration 1004. Further, logical grouping 1050 can include an electrical component that may provide means for accessing current context information and comparing the current context information to a persisted model 1005. Further, logical grouping 1050 can include an electrical component that may provide means for outputting a predicted charge duration 1006. Further, logical grouping 1050 can include an electrical component that may provide means for mapping charge duration to charging parameters 1007. Further, logical grouping 1050 can include an electrical component that may provide means for initiating a battery charge using custom charging parameters. Further, logical grouping 1050 can include an electrical component that may provide means for storing current context and update models 1009.

Additionally, system 1000 can include a memory 1051 that retains instructions for executing functions associated with the electrical components 1001, 1002, 1003, 1004, 1005, 1006, and 1007, and stores data used or obtained by the electrical components 1001, 1002, 1003, 1004, 1005, 1006, and 1007, etc. While shown as being external to memory 1051, it is to be understood that one or more of the electrical components 1001, 1002, 1003, 1004, 1005, 1006, and 1007 may exist within memory 1051. In one example, electrical components 1001, 1002, 1003, 1004, 1005, 1006, and 1007 can include at least one processor, or each electrical component 1001, 1002, 1003, 1004, 1005, 1006, and 1007 can be a corresponding module of at least one processor. Moreover, in an additional or alternative example, electrical components 1001, 1002, 1003, 1004, 1005, 1006, and 1007 may be a computer program product including computer readable medium (e.g., non-transitory), where each electrical component 1001, 1002, 1003, 1004, 1005, 1006, and 1007 may be corresponding code.

The above description illustrates various aspects of the disclosure along with examples of how aspects of the particular aspects may be implemented. The above examples should not be deemed to be the only aspects, and are presented to illustrate the flexibility and advantages of the particular aspects as defined by the following claims. Based on the above disclosure and the following claims, other arrangements, aspects, implementations and equivalents may be employed without departing from the scope of the disclosure as defined by the claims.

## Claims

1. A method comprising:
accessing, by an electronic device, context information describing one or more usage patterns of the electronic device; and
predicting, by the electronic device, a charging duration based on the context information, **characterized by**
determining, by the electronic device, charging parameters based on the charging duration, the charging parameters being used to charge a battery of the electronic device; and
configuring a battery charger with the charging parameters to charge the battery.

2. The method of claim 1, said predicting comprising generating (502) a model establishing relations between data elements of the context information and the charging duration.

3. The method of claim 2, said predicting further comprising:
storing the context information as charge history data (412); and
comparing the charge history data (412) to a current context information to predict said charging duration.

4. The method of claim 2, the model being generated dynamically.

5. The method of claim 2, the model classifying past context information and current context elements into a discrete number of charging durations.

6. The method of claim 1, the charging parameters comprising a charge current and a float voltage.

7. The method of claim 1, the context information comprising measured parameters and prescriptive parameters, the method further comprising receiving (501) the charging duration, the measured parameters, and the prescriptive parameters in a charging application and mapping (507) the charging duration to the charging parameters based on the measured parameters and the prescriptive parameters.

8. The method of claim 1, the context information comprising a charge status (401), a charge time (403), a location (404), a charge source (405), and a battery level (402).

9. An electronic device comprising:
a battery charger (111) ;
a battery (110);
at least one processor configured to:
access context information describing one or more usage patterns of the electronic device; and
predict a charging duration based on the context information, characterized to
determine charging parameters based on the charging duration, the charging parameters being used to charge the battery of the electronic device; and
configure the battery charger with the charging parameters to charge the battery; and
at least one memory (1051) coupled to the at least one processor.

10. The electronic device of claim 9, the at least one processor being configured to predict the charging duration by generating (502) a model to establish relations between data elements of the context information and the charging duration.

11. The electronic device of claim 10, the at least one processor being further configured to predict the charging duration by:
storing the context information as charge history data (412); and
comparing the charge history data (412) to a current context information to predict said charging duration.

12. The electronic device of claim 10, the model being generated dynamically.

13. The electronic device of claim 10, the model classifying past context information and current context elements into a discrete number of charging durations.

14. The electronic device of claim 9, the charging parameters comprising a charge current and a float voltage.

15. A non-transitory computer readable medium having stored thereon one or more instructions, which when executed by one or more processor, causes the one or more processors to:
access context information describing one or more usage patterns of the electronic device; and
predict a charging duration based on the context information, characterized to
determine charging parameters based on the charging duration, the charging parameters being used to charge the battery of the electronic device; and
configure the battery charger with the charging parameters to charge the battery.

## Patentansprüche

1. Verfahren, das Folgendes aufweist:
Zugreifen durch eine elektronische Einrichtung auf Kontextinformation, die eines oder mehrere Verwendungsmuster der elektronischen Einrichtung beschreibt, und
Vorhersagen durch die elektronische Einrichtung einer Ladedauer basierend auf der Kontextinformation, **gekennzeichnet durch**
Bestimmen durch die elektronische Einrichtung von Ladeparametern basierend auf der Ladedauer, wobei die Ladeparameter verwendet werden,
um eine Batterie der elektronischen Einrichtung zu laden; und
Konfigurieren einer Batterieladevorrichtung mit den Ladeparametern zum Laden der Batterie.

2. Verfahren gemäß Anspruch 1, wobei das Vorhersagen das Erzeugen (502) eines Modells aufweist, das Beziehungen zwischen Datenelementen der Kontextinformation und der Ladedauer aufbaut.

3. Verfahren gemäß Anspruch 2, wobei das Vorhersagen ferner Folgendes aufweist:
Speichern der Kontextinformation als Ladeverlaufsdaten (412); und
Vergleichen der Ladeverlaufsdaten (412) mit einer aktuellen Kontextinformation, um die Ladedauer vorherzusagen.

4. Verfahren gemäß Anspruch 2, wobei das Modell dynamisch erzeugt wird.

5. Verfahren gemäß Anspruch 2, wobei das Modell vergangene Kontextinformation und aktuelle Kontextelemente in eine diskrete Anzahl von Ladedauern klassifiziert.

6. Verfahren gemäß Anspruch 1, wobei die Ladeparameter einen Ladestrom und eine Ladungserhaltungsspannung bzw. Float-Voltage aufweist.

7. Verfahren gemäß Anspruch 1, wobei die Kontextinformation gemessene Parameter und verordnende Parameter aufweist, wobei das Verfahren ferner Empfangen (501) der Ladedauer, der gemessenen Parameter und der verordnenden Parameter in einer Ladeanwendung und Abbilden (507) der Ladedauer auf die Ladeparameter basierend auf den gemessenen Parametern und den verordnenden Parametern aufweist.

8. Verfahren gemäß Anspruch 1, wobei die Kontextinformation einen Ladestatus (401), eine Ladezeit (403), einen Ort bzw. eine Position (404), eine Ladequelle (405) und einen Batteriepegel (402) aufweist.

9. Elektronische Einrichtung, die Folgendes aufweist:
eine Batterieladevorrichtung (111);
eine Batterie (110);
zumindest einen Prozessor, der konfiguriert ist, um:
auf Kontextinformation zuzugreifen, die eines oder mehrere Verwendungsmuster der elektronischen Einrichtung beschreibt; und
eine Ladedauer basierend auf der Kontextinformation vorherzusagen, **gekennzeichnet durch**
Bestimmen von Ladeparameter basierend auf der Ladedauer, wobei die Ladeparameter verwendet werden, um die Batterie der elektronischen Einrichtung zu laden; und
Konfigurieren der Batterieladevorrichtung mit den Ladeparametern, um die Batterie zu laden; und
zumindest einen Speicher (1051), der mit dem zumindest einen Prozessor gekoppelt ist.

10. Elektronische Einrichtung gemäß Anspruch 9, wobei der zumindest eine Prozessor konfiguriert ist, um die Ladedauer durch Erzeugen (502) eines Modells zum Aufbau von Beziehungen zwischen Datenelementen der Kontextinformation und der Ladedauer vorherzusagen.

11. Elektronische Einrichtung gemäß Anspruch 10, wobei der zumindest eine Prozessor ferner konfiguriert ist, um die Ladedauer durch Folgendes vorherzusagen:
Speichern der Kontextinformation als Ladeverlaufsdaten (412); und
Vergleichen der Ladeverlaufsdaten (412) mit einer aktuellen Kontextinformation, um die Ladedauer vorherzusagen.

12. Elektronische Einrichtung gemäß Anspruch 10, wobei das Modell dynamisch erzeugt wird.

13. Elektronische Einrichtung gemäß Anspruch 10, wobei das Modell vergangene Kontextinformation und aktuelle Kontextelemente in eine diskrete Anzahl von Ladedauern klassifiziert.

14. Elektronische Einrichtung gemäß Anspruch 9, wobei die Ladeparameter einen Ladestrom und eine Ladeerhaltungsspannung bzw. eine Float-Voltage aufweisen.

15. Nicht-transitorisches, computerlesbares Medium, das eine oder mehrere, darauf gespeicherte Anweisungen aufweist, die bei Ausführung durch einen oder mehrere Prozessoren den einen oder die mehreren Prozessoren zu Folgendem veranlassen:
Zugreifen auf Kontextinformation, die eines oder mehrere Verwendungsmuster der elektronischen Einrichtung beschreiben; und
Vorhersagen einer Ladedauer basierend auf der Kontextinformation, **gekennzeichnet durch**
Bestimmen von Ladeparametern basierend auf der Ladedauer, wobei die Ladeparameter verwendet werden, um die Batterie der elektronischen Einrichtung zu laden; und
Konfigurieren der Batterieladevorrichtung mit Ladeparametern, um die Batterie zu laden.

## Revendications

1. Un procédé comprenant :
l'accès, par un dispositif électronique, à des informations de contexte décrivant un ou plusieurs modèles d'utilisation du dispositif électronique, et
la prédiction, par le dispositif électronique, d'une durée de charge en fonction des informations de contexte, **caractérisé par**
la détermination, par le dispositif électronique, de paramètres de charge en fonction de la durée de charge, les paramètres de charge étant utilisés de façon à charger une batterie du dispositif électronique, et
la configuration d'un chargeur de batterie avec les paramètres de charge de façon à charger la batterie.

2. Le procédé selon la Revendication 1, ladite prédiction comprenant la génération (502) d'un modèle établissant des relations entre des éléments de données des informations de contexte et la durée de charge.

3. Le procédé selon la Revendication 2, ladite prédiction comprenant en outre :
la conservation en mémoire des informations de contexte sous la forme de données d'historique de charge (412), et
la comparaison des données d'historique de charge (412) à des informations de contexte actuelles de façon à prédire ladite durée de charge.

4. Le procédé selon la Revendication 2, le modèle étant généré dynamiquement.

5. Le procédé selon la Revendication 2, le modèle classant des informations de contexte passées et des éléments de contexte actuels en un nombre discret de durées de charge.

6. Le procédé selon la Revendication 1, les paramètres de charge comprenant un courant de charge et une tension d'entretien.

7. Le procédé selon la Revendication 1, les informations de contexte comprenant des paramètres mesurés et des paramètres normatifs, le procédé comprenant en outre la réception (501) de la durée de charge, des paramètres mesurés et des paramètres normatifs dans une application de charge et la mise en correspondance (507) de la durée de charge avec les paramètres de charge en fonction des paramètres mesurés et des paramètres normatifs.

8. Le procédé selon la Revendication 1, les informations de contexte comprenant un état de charge (401), un temps de charge (403), un emplacement (404), une source de charge (405) et un niveau de batterie (402).

9. Un dispositif électronique comprenant :
un chargeur de batterie (111),
une batterie (110),
au moins un processeur configuré de façon à :
accéder à des informations de contexte décrivant un ou plusieurs modèles d'utilisation du dispositif électronique, et
prédire une durée de charge en fonction des informations de contexte, caractérisé de façon à
déterminer des paramètres de charge en fonction de la durée de charge, les paramètres de charge étant utilisés de façon à charger la batterie du dispositif électronique, et
configurer le chargeur de batterie avec les paramètres de charge de façon à charger la batterie, et
au moins une mémoire (1051) couplée au au moins un processeur.

10. Le dispositif électronique selon la Revendication 9, le au moins un processeur étant configuré de façon à prédire la durée de charge par la génération (502) d'un modèle destiné à l'établissement de relations entre des éléments de données des informations de contexte et la durée de charge.

11. Le dispositif électronique selon la Revendication 10, le au moins un processeur étant configuré en outre de façon à prédire la durée de charge par :
la conservation en mémoire des informations de contexte sous la forme de données d'historique de charge (412), et
la comparaison des données d'historique de charge (412) à des informations de contexte actuelles de façon à prédire ladite durée de charge.

12. Le dispositif électronique selon la Revendication 10, le modèle étant généré dynamiquement.

13. Le dispositif électronique selon la Revendication 10, le modèle classant des informations de contexte passées et des éléments de contexte actuels en un nombre discret de durées de charge.

14. Le dispositif électronique selon la Revendication 9, les paramètres de charge comprenant un courant de charge et une tension d'entretien.

15. Un support lisible par ordinateur non transitoire possédant conservées en mémoire sur celui-ci une ou plusieurs instructions, qui, lorsqu'elles sont exécutées par un ou plusieurs processeurs, amènent les un ou plusieurs processeurs à :
accéder à des informations de contexte décrivant un ou plusieurs modèles d'utilisation du dispositif électronique, et
prédire une durée de charge en fonction des informations de contexte, caractérisé de façon à
déterminer des paramètres de charge en fonction de la durée de charge, les paramètres de charge étant utilisés de façon à charger la batterie du dispositif électronique, et
configurer le chargeur de batterie avec les paramètres de charge de façon à charger la batterie.
